(19) Europäisches Patentamt
European Patent Office
Office européen des brevets

(11) **EP 3 359 626 B1**

(12) **EUROPEAN PATENT SPECIFICATION**

(45) Date of publication and mention
of the grant of the patent:
**18.12.2019 Bulletin 2019/51**

(21) Application number: **16782200.6**

(22) Date of filing: **07.10.2016**

(51) Int Cl.:
*C10B 53/07* (2006.01)  *C10B 19/00* (2006.01)
*C10G 1/10* (2006.01)  *B01J 29/74* (2006.01)
*B01J 29/78* (2006.01)  *B01J 29/22* (2006.01)
*B01J 29/26* (2006.01)  *B01J 29/18* (2006.01)
*B01J 29/70* (2006.01)  *B01J 29/44* (2006.01)
*B01J 29/48* (2006.01)

(86) International application number:
**PCT/EP2016/074057**

(87) International publication number:
**WO 2017/060464 (13.04.2017 Gazette 2017/15)**

(54) **PYROLYSIS PROCESS AND PLASMA PYROLYSIS REACTOR FOR CARRYING OUT SAID PROCESS.**

PYROLYSEVERFAHREN UND PLASMAPYROLYSEREAKTOR ZUR DURCHFÜHRUNG DIESES VERFAHRENS

PROCÉDÉ DE PYROLYSE ET RÉACTEUR DE PYROLYSE À PLASMA POUR EFFECTUER LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2015 IT UB20154284**

(43) Date of publication of application:
**15.08.2018 Bulletin 2018/33**

(73) Proprietor: **Eme International Limited**
**Pieta PTA 9041 (MT)**

(72) Inventor: **FUMAGALLI, Marco Luigi**
**23889 Santa Maria Hoè (LC) (IT)**

(74) Representative: **Brasca, Marco**
**PGA S.p.A.**
**Via Mascheroni, 31**
**20145 Milano (IT)**

(56) References cited:
WO-A1-2014/146128  CN-A- 101 302 432
US-A1- 2007 114 119  US-A1- 2014 228 605
US-B1- 6 184 427

**Description**

Field of the invention

The present invention relates to a pyrolysis process, to a plasma pyrolysis reactor and to an apparatus for processing organic and/or inorganic origin waste materials.

Background of the invention

Pyrolysis is a known process consisting in the thermal decomposition of biomass occurring in the absence of oxygen.

The process of pyrolysis of organic matter is very complex and consists of both simultaneous and successive reactions when organic material is heated in a nonreactive atmosphere. In this process the thermal decomposition of organic components in biomass starts at 350 °C-550 °C and goes up to 700 °C-800 °C in the absence of air/oxygen. The long chains of carbon, hydrogen and oxygen compounds in biomass break down into smaller molecules in the form of gases, condensable vapours (tars and oils) and solid charcoal under pyrolysis conditions. Rate and extent of decomposition of each of these components depends on the process parameters of the reactor (pyrolysis) temperature; biomass heating rate; pressure; reactor configuration; feedstock; etc.

Pyrolysis is carried out in a reactor wherein biomass is introduced and certain temperature and pressure conditions are reached in order to form the pyrolysis oil. Pyrolysis oil and syngas are the output of the pyrolysis process. Syngas is usually burnt to supply heat to the reactor and helps in self-sustaining the pyrolysis reaction. Plasma pyrolysis reactors are known. A known plasma pyrolysis reactor comprises a reactor tube, which is fed with waste material. The known reactor comprises two plasma torches, each having a cathode and an anode. Each plasma torch is fed with a plasma forming gas such as air and generates a plasma arc inside the reactor tube. The plasma arc supplies heat to the reactor in order to sustain the pyrolysis

Document US2007114119 discloses a system and method for neutralizing fluid chemical waste products that result from a chemical production process and are collected from the production line. The system comprises a pyrolysis/reaction chamber into which the fluid chemical waste is pumped through an atomizer.

Document WO2014146128 discloses a zeolite catalysts, methods of producing the zeolite catalysts and a method of using such catalyst.

Document US6184427 discloses a process of activated cracking of high molecular organic waste material which includes confining the organic waste material in a reactor space as a mixture with a pulverized electrically conducting material and/or catalysts and/or "upgrading agents" and treating this mixture by microwave or radio frequency electromagnetic radiation.

Document US2014228605 discloses a method of producing olefins and aromatic compounds from a feedstock which includes introducing a hydrocarbon feedstock and a catalyst composition that is suitable for converting the feedstock to at least one of olefins and aromatic compounds within a reactor.

The known reactors can be fed just with one type of waste material at once, for example with tires.

Further, the known reactors are not easily controllable in operating conditions. The known reactors are for example difficult to control from the point of view of the energy output.

Another problem of known plasma pyrolysis reactors in general is linked to their efficiency that today is usually under 40%. It would be desirable to enhance the efficiency of the reactor in order to maximize the energy output of the reactor while for example minimizing the input material fed in the reactor itself.

In this field, the Applicant has observed that the structure of the reactor can be improved.

The Applicant has further observed that the control of the reactor itself can be enhanced and optimized.

The Applicant has verified that the above-mentioned drawbacks and/or limitations of the known reactors can be overcome by a plasma pyrolysis reactor, by an apparatus for processing organic and/or inorganic origin waste materials and by a process of controlling a plasma pyrolysis reactor according to one or more of the following aspects and/or to one or more of the appended claims.

Summary

In a first aspect, the invention relates to a pyrolysis process according to claim 1.

The control of the temperature of the plasma arc is a dynamic control, i.e. a control that is carried out continuously while processing the batch in the reactor.

Thanks to such a dynamic control of the reactor, the reactor can be fed with different types of organic and/or inorganic origin waste materials, such as tires, plastic materials and/or organic materials. In particular, the reactor can be fed with a mix of those materials, while common reactors can be fed only with one type of waste material at once.

Further, thanks to such a control of the reactor, the reactor efficiency is maximized. While in known reactors the reactor efficiency is around 0,4 (40%), the process according to the invention allows to reach a reactor efficiency of 0,8 (80%) or even 0,9 (90%).

In an aspect, the step of controlling the temperature of the plasma arc comprises measuring the actual temperature of the plasma arc.

In an aspect, the process comprises, before feeding the batch in the reactor, identifying the type of organic and/or inorganic origin waste materials.

In an aspect, identifying the type of waste materials comprises measuring the carbohydrate density of the batch and/or calculating the average chain length of the batch.

In an aspect, the average chain length is the alkane average chain length.

In an aspect, the degree of ionization and the reactor efficiency ($\theta$) are the same parameter.

In an aspect, the parameters relating to the type of organic and/or inorganic origin waste materials comprise at least carbohydrate density.

In an aspect, the parameters relating to the type of organic and/or inorganic origin waste materials relate at least to the types of polymers.

In an aspect, the parameters relating to the type of organic and/or inorganic origin waste materials comprise the polymer average chain length.

In an aspect, the polymer average chain length is calculated by:

- identifying the types of polymers,
- retrieving in a database the average chain length of each type of polymer,
- calculating the polymer average chain length of the batch.

The database is operatively connected to the reactor and to a control unit.

In an aspect, the polymer average chain length is the overall average chain length of the batch.

In an aspect, the average chain length of the batch is calculated as the average of the average chain lengths of the types of polymer comprised in the batch.

The step of calculating the target temperature of the plasma arc is carried out as a function of the reactor efficiency.

The reactor efficiency is retrieved in a database containing reactor efficiencies of previous pyrolysis processes of said reactor.

The reactor efficiency is calculated as the ratio between the difference of the weight of the batch fed in the reactor and the weight of leftover slag after batch processing to the weight of the batch fed in the reactor. The reactor efficiency is comprised between 0 and 1.

The step of calculating the target temperature of the plasma arc is carried out as a function of the efficiency of pyrolytic output.

The efficiency of pyrolytic output is retrieved in a database containing efficiencies of pyrolysis of previous pyrolysis processes of said reactor.

The efficiency of pyrolytic output is calculated as the ratio between the weight of material converted to pyrolysis oil (or the weight of the pyrolysis oil) and the weight of the batch fed in the reactor. The efficiency of pyrolytic output is comprised between 0 and 1.

In an aspect, the step of calculating the target temperature of the plasma arc is carried out as a function of the reactor efficiency, of the efficiency of pyrolytic output and of the batch profile.

In an aspect, the target temperature of the plasma arc is proportional, preferably directly proportional, at least to the reactor efficiency and/or to the efficiency of pyrolytic output and/or to the batch profile.

In an aspect, the batch profile is calculated as a function of the polymer average chain length of the batch and of the carbohydrate density of the batch.

In an aspect, the temperature of the plasma arc is controlled by regulating one or more parameters of a plasma forming device, for example the voltage and/or the amperage and/or the frequency and/or the pressure of a plasma forming gas.

In an aspect, the actual temperature of the plasma arc is maintained substantially constant during the batch processing.

In an aspect, the process comprises, after the batch processing, the step of storing data relating to the batch processing in a database operatively connected to the reactor, wherein the stored data comprise at least: reactor efficiency and/or efficiency of pyrolytic output of the process.

In an aspect, the step of storing data is carried out for each batch fed in the reactor. In an aspect, the process comprises updating the data already contained in the database with the stored data relating to the batch processing.

In an aspect, the stored data comprise at least: type of materials of the batch and/or plasma arc parameters and/or reactor conditions and/or reactor parameters and/or reactor efficiency and/or efficiency of pyrolytic output.

In a second aspect, the invention relates to a plasma pyrolysis reactor as defined in claims 10-14.

In this text, the terms batch and input materials are used to identify the waste materials that are fed in the plasma pyrolysis reactor.

In the following, some known catalysts and further catalysts, which are destined to be used in the plasma pyrolysis reactor and apparatus according to the invention, are described. The catalysts can be used also with other types of reactors and apparatuses. Zeolites have been regarded as one of the most important catalysts in petrochemical industry due to their excellent catalytic performance.

Zeolites are crystalline aluminosilicates built up from corner-sharing oxygen tetrahedra occupied by $Si^{4+}$ or $Al^{3+}$ ions. They combine tunable surface acidity with favorable textural properties for catalysis such as high surface area, high thermal stability and high connectivity of uniformly-sized micropores. There are different types of zeolites (clinoptilolite, chabazite, phillipsite, mordenite, etc.) with varying physical and chemical properties. Crystal structure and chemical composition account for the primary differences. Particle density, cation selectivity, molecular pore size, and strength are only some of the properties that can differ depending on the zeolite in question.

Synthetic zeolites are typically classified by pore size as either microporous having pores diameter of less than about 2 nm, or mesoporous having a pores diameter ranging from about 2 nm to about 50 nm.

Synthetic zeolites used as catalysts in the petrochemical industry are well known to the expert in the art. Any of such zeolites can be used in the reactor of the present invention.

Examples of suitable microporous zeolite catalysts which can be used in the reactor of the present invention are ZSM-5, having a Mordenite framework inverted structure (MFI), and SSZ-13, having a Chabazite structure (CHA).

Other examples of suitable synthetic zeolite catalysts which can be used in the reactor of the present invention are those with larger pores or mesoprous characteristics, such as AI-MCM-41, AI-MSU-S and alumina stabilized Ceria. Other examples of suitable synthetic zeolite catalysts which can be used in the reactor of the present invention are those combining the advantages of mesostructured materials, such as fast diffusion and accessible for bulky molecules, and microporous zeolites, such as strong acidity and high hydrothermal stability. Mesoporosity can be introduced into the zeolite crystals through post-synthesis treatments including steaming and leaching methods with acidic or basic media. Mesoporous zeolites with good crystallinity can also be prepared employing mesoscale templates, which could be achieved by "hard" or "soft" templating strategies; examples of such mesoporous zeolites including FAU, MFI, BEA, LTA, LTL, MEL and MTW framework types are reviewed by Zhu, J et al., Front. Chem. Sci. Eng. 2013, 7(2):233-248.

Other suitable examples of zeolite catalysts which can be used in the reactor of the present invention are those described in the international application WO2014/146128, being mesoporous zeolite catalysts having a Mordenite framework inverted structure (MFI), optionally comprising gallium (Ga) as dehydrogenating metal. The preparation of said mesoporous zeolite catalysts using a silane-functionalized polymer such as a silane- functionalized polyetheramine or polyethylenimine as mesopore-directing agent is also described therein.

Other suitable examples of zeolite catalysts which can be used in the reactor of the present invention are those described by Zhu, X et al., Chem. Commun. 2014, 50, 14658-61, being respectively: a mesoporous SSZ-13 zeolite catalyst having a Chabazite (CHA) structure, particles dimension in the range of 200-500, for example 300 nm, mesopore size of about 3.8 nm and a micropore volume of 0.18 $cm^3/g$; and a mesoporous ZSM-5 zeolite catalyst having a Mordenite famework inverted structure (MFI), particles dimension in the range of 200-500, for example 400 nm, and a mesopore volume of 0.22 $cm^3/g$; a simple surfactant containing a bulky mono-quaternary ammonium head group in the form of N-methylpiperidine and a cetyl ($C_{16}$) tail group has been used to introducing mesoporosity into both the zeolites described by Zhu.

Altought the availability of a great number of zeolite catalysts to be used in petroleum industry, there is still a need for new catalysts for use catalytic upgrading of biomass pyrolysis products in order to produce high quality and yield of bio-oil with low amounts of oxygen and water, minimize the undesirable compounds present in the bio-oil and exhibit both resistance to deactivation and thermal stability, at the same time having low cost.

The Applicant has surprisingly found specific mesoporous zeolite catalysts having a Mordenite framework inverted structure (MFI) or a Chabazite (CHA) structure.

Further shown is a zeolite catalyst having a Mordenite framework inverted (MFI) structure and an average intracrystal mesopore size of in the range from about 2.0 to about 4.5 nm, characterized by:

- an average mesopore volume in the range from about 0.1 $cm^3/g$ to about 0.2 $cm^3/g$.

Further shown is a zeolite catalyst having a Chabazite (CHA) structure and an average intracrystal mesopore size of in the range from about 2.0 to about 4.5 nm, characterized by:

- an average micropore volume in the range from about 0.05 to about 0.15 $cm^3/g$.

Further shown is a zeolite catalyst having sixth a) a Mordenite framework inverted (MFI) or sixth b) a Chabazite (CHA) structure and an average intracrystal mesopore size of in the range from about 2.0 to about 4.5 nm, characterized by further comprising molybdenum (Mo) or Platinum (Pt) as dehydrogenating metal.

Further shown is the preparation of the zeolite catalyst according to the fourth aspect of the present invention or a composition comprising the same.

Further shown is the preparation of the zeolite catalyst according to the fifth aspect of the present invention or a composition comprising the same.

Further shown is the preparation of the zeolite catalysts according to the sixth aspect of the present invention or a composition comprising the same.

Description of drawings

Such description will be set forth hereinbelow with reference to the set of drawings, provided merely as a non-limiting example, in which:

Figure 1 is a schematic view of an apparatus for processing organic and/or inorganic origin waste material according to the invention;

figure 2 is a schematic view of a plasma pyrolysis reactor according to the invention.

Detailed description

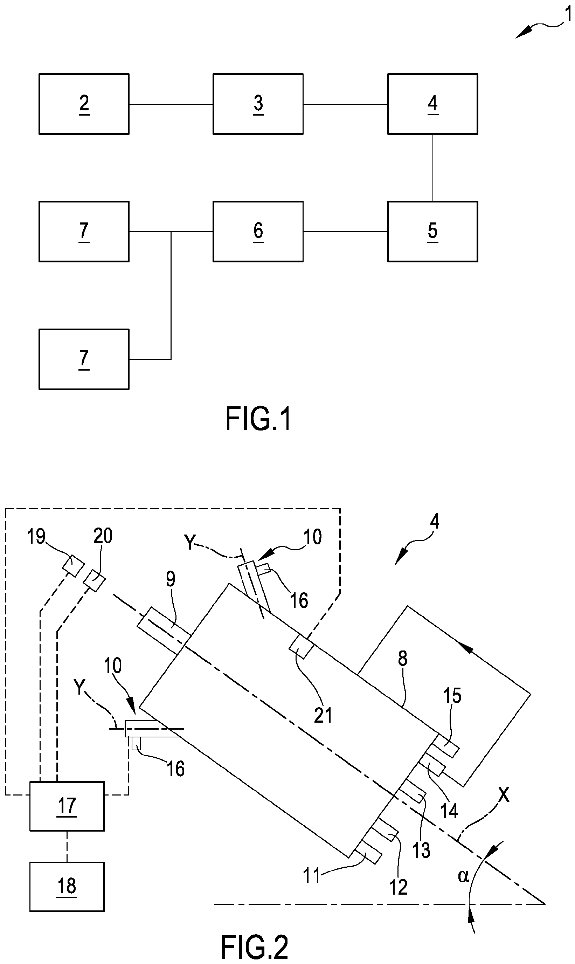

Referring to the attached schematic figure 1, the apparatus is identified by reference numeral 1. The apparatus 1 is configured for processing organic and/or inorganic origin waste materials.

The apparatus 1 comprises a loading station 2, a shredding station 3, at least a pyrolysis reactor 4, a coolant station 5, a refrigeration station 6 and one or more oil containers 7. In figure 1, an apparatus 1 comprising two oil containers 7 is represented. The loading station 2 is configured for loading the input material destined to be processed in the reactor 4 and to move it towards the reactor 4, for example by means of one or more conveyor belts. The shredding station 3 receives the material arriving from the loading station 2 and is configured for shredding it. The plasma pyrolysis reactor 4 is placed downstream the shredding station 3. The reactor 4 converts the material arriving from the shredding station 3 into pyrolysis oil by means of a pyrolysis process. The reactor 4 can be fed with both organic and inorganic origin waste materials, for example with tires, with biomass, with plastic etc. and with any other type of waste material. In particular, the reactor 4 can be fed with a mix of organic and inorganic origin waste materials. The outputs of the reactor 4 comprise pyrolysis oil, petcoke and some metal materials. The reactor 4 further produces syngas that can be used to supply heat for the pyrolysis reaction or for the warming up of the reactor 4. As shown in figure 2, the syngas can be recirculated in the reactor 4 to self-sustain the pyrolysis reaction.

The petcoke can be sold and used as a fuel.

The pyrolysis oil is stocked in the containers 7 and can be used in different ways. The pyrolysis oil can be used, for example:

- to feed a power station (for the production of electricity and/or heat); and/or
- for the production of diesel; and/or
- in a refinery, where it undergoes chemical reactions to become gasoline and kerosene.

The pyrolysis reactor 4 comprises a main body 8 defining a reactor chamber, an inlet 9 for the input waste materials, at least one plasma forming device 10 and at least one outlet 11, 12, 13, 14, 15 for the outputs of the pyrolysis reaction. The pyrolysis reactor 4 preferably comprises a first outlet 11 for pyrolysis oil, a second outlet 12 for petcoke, a third outlet 13 for metal materials, a fourth outlet 14 for syngas and a fifth outlet 15 for the exhaust gasses.

The main body 8 develops along a main direction defined by a main development axis X and is configured for rotating around the main development axis X. In operating conditions of the reactor 4, the main development axis X is inclined with respect to a horizontal direction in order to facilitate the advancement of the material inside the reactor 4. The development axis X of the reactor body 8 forms with respect to a horizontal direction an angle $\alpha$ comprised between 40° and 80°, more preferably of about 60°. The angle $\alpha$ is defined as the smallest angle formed between the development axis X and the horizontal direction (see figure 2).

The inlet materials fed in the reactor 4 can be any type of materials, for example organic material, tires, plastic materials, polymers or any other type of waste materials. The reactor 4 is configured for processing a mix of organic and/or inorganic origin waste materials and for converting them to pyrolysis oil.

The plasma forming device 10 can be of the known type, for example a plasma torch. In figure 2 a reactor 4 having two plasma forming devices 10 is illustrated. The plasma forming device 10 has an elongated shape developing along a main direction Y and is in communication with the reactor chamber for generating inside it the plasma arc. The direction of development Y of the plasma forming device 10 is preferably transversal to the direction of development X of the reactor body 8 (see figure 2). A water cooling system can be provided to cool the plasma forming device 10.

The plasma forming device 10 comprises a copper anode and a hafnium cathode that are configured for generating a voltage apt to ionize a plasma forming gas. Other types of anode and cathode can be equally used for the ionization of the gas. The plasma forming gas is fed in the plasma forming device 10 at an inlet 16. The plasma forming gas is for example air or argon. The plasma forming device 10 is supplied with a voltage, an amperage and a gas having a pressure that are adapted for generating the plasma arc that develops inside the reactor chamber.

The reactor 4 is fed with waste material that undergoes the pyrolysis reaction inside the reactor chamber.

The reactor 4 further comprises a control unit 17 that is operatively connected to the plasma forming device 10 and to a database 18.

The reactor 4 is configured for being controlled while the reactions inside the reactor chamber are ongoing, e.g. during the operation of the reactor 4. Such a dynamic control of the reactor 4 allows to modify operating parameters of the plasma forming device 10 in order to control the pyrolysis reaction. In particular, the control of the reactor 4 is carried out by controlling the temperature of the plasma arc. A target temperature of the plasma arc is calculated and then the temperature of the plasma arc is controlled to maintain the actual temperature of the plasma arc as close as possible to the target temperature. The actual temperature of the plasma arc is calculated by the control unit 17, preferably as a function of one or more parameters relating to the type of organic and/or inorganic origin waste materials.

The reactor 4 can further comprise sensors 19, 20 operatively connected to the control unit 17 and configured respectively for identifying the types of polymers of the batch and for measuring the carbohydrate density of the batch. The sensors 19, 20 are operatively connected to the database 18 by means of the control unit 17 (see figure 2). The sensors 19, 20 are placed upstream the reactor 4 and perform their measurements before the waste material is fed in the reactor chamber. The sensors 19 can be infrared sensors and in particular near-infrared (NIR) sensors, while the sensors 20 can be chromatographic sensors. In particular, the sensors 20 can use high performance liquid chromatography (HPLC) methods for measuring the carbohydrate density of the batch.

The target temperature can be measured by means of a temperature sensor 21. Said sensor 21 can be placed inside the reactor chamber and is operatively connected to the control unit 17 (see figure 2).

A specific algorithm for calculating the target temperature of the plasma arc is now described. The algorithm is according to the following equation:

$$T = \theta * E_p(B) * B_p * B * \xi$$

wherein:

- T is the target temperature of the plasma arc in Celsius,
- $\theta$ is the degree of ionization (or reactor efficiency),
- $E_p(B)$ is the efficiency of pyrolytic output,
- $B_p$ is the batch profile,
- B is the weight of the batch in kilograms,
- $\xi$ is a proprietary logarithmic function.

Here are some remarks about the variables/parameters of the preceding equation.

Degree of ionization (reactor efficiency): $\theta$

The degree of ionization is calculated as follows:

$$\theta = (\text{weight of batch - weight of slag}) / (\text{weight of batch})$$

In the preceding formula the batch is assumed to be the batch incoming in the reactor 4 and the slag is the leftover material in the reactor 4 at the end of the batch processing. The weights of the batch and of the slag are preferably expressed in kilograms (kg). If the batch weighs 100 kg and there are 10 kg of slag at the end of the batch cycle, then theta ($\theta$) for that batch process is 0.90.

The degree of ionization computes the overall efficiency of plasma formation.

The degree of ionization is a function of reactor geometry, firing frequency (frequency of the plasma arc) and temperature gradient within the reactor chamber. The degree of ionization for the reactor 4 is stored in the database 18.

The degree of ionization is derived from a series of batch runs (of at least 1000) and its value for a specific reactor is updated with the value of the degree of ionization calculated at the end of the batch processing.

Before batch processing, the degree of ionization (reactor efficiency) of the reactor 4 is retrieved by the control unit 17 in the database 18 containing reactor efficiencies of previous pyrolysis processes occurred in the reactor 4. For example, the reactor efficiency can be calculated as the average of reactor efficiencies of previous pyrolysis processes occurred in the reactor 4. The degree of ionization stored in the database 18 is an historical parameter for the specific type of reactor 4 and is updated after each batch processing occurred in the reactor 4 to increase the accuracy of data on the reactor 4. Variances in theta are fed back into the database after batch processing to create a data-driven dynamic feedback loop so that paired average chain length and carbohydrate values can be correlated to ideal efficiency plasma arc parameters. In other words, values and variances of these values of the degree of ionization are meant to be dynamically collected (in the database 18) across all reactors in current operation (worldwide) and are traceable electronically to each specific reactor. Feedback on changes to other variables in plasma pyrolysis process is meant to be universally available automatically. In other words, as data about the degree of ionization for each batch enters the system (the database 18), it is checked against other known variables from the database 18 of existing reactors. This check can be carried out by means of the control unit 17. This check is done to both ensure that any specific batch currently undergoing pyrolysis does not exhibit statistical anomalies in degree of ionization and to also discover what other hidden variables in batch components, reactor operations etc. may impact (positively or negatively) the degree of ionization.

Efficiency of pyrolytic output: $E_p(B)$

The efficiency of pyrolytic output is calculated as the percentage by weight of the batch (B) that is converted to pyrolysis oil. The efficiency of pyrolytic output can be calculated as the ratio between the weight of pyrolysis oil to the weight of the batch. Before batch processing, the efficiency of pyrolytic output of the reactor 4 is retrieved by the control unit 17 in the database 18 containing efficiencies of pyrolytic output of previous pyrolysis processes occurred in the reactor 4. For example, the efficiency of pyrolytic output of the reactor 4 can be calculated as the average of the efficiencies of pyrolytic output of previous pyrolysis processes occurred in the reactor 4. The efficiency of pyrolytic output stored in the database 18 is an historical parameter for the specific type of reactor 4 and is updated after each batch processing occurred in the reactor 4 to increase the accuracy of data on the reactor 4. For the plasma pyrolysis reactor of the invention, the efficiency of pyrolytic output can be as high as 0,9.

Batch profile: $B_p$

The batch profile is a parameter that is linked to the materials comprised in the batch. The batch profile is calculated according to the following equation:

$$B_p = C_d * A_{cl}$$

wherein:

- $C_d$ is the carbohydrate density, that is comprised between 0 and 1 and is calculated according to the following equation:

$$C_d = C_m / ( C_m + N_{cm} )$$

wherein $C_m$ is the density of carbohydrate molecules and $N_{cm}$ is the density of non-carbohydrate molecules.

The carbohydrate density can be measured according to known methods, for example by means of chromatographic methods. Of those, HPLC (High Performance Liquid Chromatography) is a standard method that is preferred because it provides for rapid and precise measurements. The carbohydrate density is measured by the chromatographic sensors 20 placed upstream the reactor 4.

- $A_{cl}$ is the alkane chain length, that is comprised between 0 and 1, where $A_{cl} = 1$ is the longest average chain length in 100 sample batch sets, while $A_{cl} = 0,00001$ is the shortest average chain length in 100 sample batch sets. $A_{cl}$ is a relative function wherein the average chain length of existing batch is set as a function of large-scale sample of prior-processed batch sets. If the value of $A_{cl}$ is 0,5 that means that out of 100 prior sample batch data sets, half (50%) of the prior sampled batch sets had longer chain lengths and half (50%) had shorter chain lengths. If the value of $A_{cl}$ is 0,9 that means that 90% of the 100 prior sampled batch sets had shorter average alkane chain lengths.

The average chain length of the batch to be processed is set and calculated as a function of the average chain length of single polymers of prior-processed batches. The database 18 comprises information on the average chain length of each polymer (such as PVC, PP, PET, PE, etc.). The polymer types of the batch are identified before entering in the reactor 4 and the average chain length of the batch is calculated as the average of the average chain lengths of all the polymer types comprised in the batch. The identification of the types of polymer comprised in the batch can be carried out by means of near infrared systems (for example near-infrared spectroscopy). The average chain length of the polymer types is measured upstream the reactor 4 by the near-infrared sensors 19.

$\xi$: proprietary logarithmic function

$\xi$ is a proprietary logarithmic function derived from batch data sets. Batch data sets are essentially data that are stored in the database 18 and are relative to the previous batch processings of the reactor 4. $\xi$ varies between a value of 2 and a value of 2000.

Here is an example of calculation of the target temperature T.

We have the following parameters:

B = 100 kg
$\theta$ = 0,90 (expected degree of ionization)
$E_p$ (B) = 0,87 (efficiency of pyrolytic output that is specific to each reactor)
Bp = $C_d$*$A_{cl}$ = 0.9 * 0.9 = 0,81
$\xi$ = 7.0 (it is the value derived from the logarithmic function. It is a variable but based on the unique parameters of $C_d$ and $A_{cl}$).

The target temperature is then calculated as follows:

T = $\theta$ * $E_p$(B)* $B_p$ * B * $\xi$ = 0,90 * 0,87 * 0,81 * 100 * 7 = 443,96 °C

A preferred embodiment of the overall process is now described.

The input materials are loaded in the loading station 2 and approach the reactor 4. The weight of the batch (B) is determined.

Before the input materials are fed in the reactor 4, the materials of the batch are identified by measuring or calculating one or more parameters, as described below. According to a preferred process, the density of carbohydrate molecules ($C_m$) and/or the density of non-carbohydrate molecules ($N_{cm}$) is measured. Then, the carbohydrate density is determined ($C_d$). According to an embodiment, the sensors 20 can measure directly the carbohydrate density ($C_d$) of the waste materials. The process provides for identification of the types of polymers by means of infrared sensors 19. Then the control unit 17 retrieves in the database 18 the average chain length ($A_{cl}$) of each type of polymer and calculates the overall average chain length of the batch (polymer average chain length).

Following the above steps, the batch profile ($B_p$) is determined.

Based on the parameters of $C_d$ and $A_{cl}$, the value of $\xi$ is determined by means of the proprietary logarithmic function.

In order to calculate the target temperature, the control unit 17 retrieves the reactor efficiency ($\theta$) and the efficiency of pyrolytic output ($E_p$(B)) in the database 18. Based on the above steps, the target temperature of the plasma arc is calculated and parameters of the plasma forming device 10 are determined. These parameters, which can be for example voltage, amperage and pressure of the plasma forming gas in input to the plasma forming device 10, are apt to make the plasma arc reach the target temperature. These are initial parameters of the process and can change during the pyrolysis process.

It would be an ideal condition to have the target temperature constant during the batch processing but the actual temperature of the plasma arc usually changes during the batch processing. In order to check the variation of the temperature of the plasma arc, the actual temperature of the plasma arc is measured during the batch processing. The control unit 17 receives the measured value of the actual temperature and controls the plasma forming device 10 such that the actual temperature of the plasma arc is maintained as close as possible to the calculated temperature. The control unit 17 controls the plasma forming device 10 by modifying voltage, amperage and pressure of the plasma forming gas in input to the plasma forming device 10. During the batch processing, the reactor body 8 rotates around its development axis X.

After the batch processing, the weight of the leftover slag is measured and the reactor efficiency ($\theta$) is calculated. The measured value of the reactor efficiency is stored in the database 18 by means of the control unit 17. In this way, the value of the reactor efficiency (degree of ionization) is updated after each batch processing. During the batch processing or at the end of the batch processing, the pyrolysis oil is extracted from the reactor 4. Then, the weight of the pyrolysis oil is measured and the efficiency of pyrolytic output is calculated ($E_p(B)$). The measured value of the efficiency of pyrolytic output is stored in the database 18 by means of the control unit 17. In this way, the value of the efficiency of pyrolytic output is updated after each batch processing.

In such a way, the more batches the reactor 4 processes and the more the data stored in the database 18 are reliable and precise.

The following is a description about comparative tests that compare the reactor according to the invention and a common fixed bed reactor.

Waste tire pyrolysis has been performed in a fixed bed reactor and the reactor according to the invention, in order to know the influence of the reactor type on yields and product characteristics. Typical pyrolysis conditions have been used in both reactors (600°C and inert atmosphere). In the reactor according to the invention an excellent process reproducibility and stability was observed.

The results obtained in the fixed bed reactor and in the reactor according to the invention are compared.

It can be appreciated from the comparison that the total rubber conversion is achieved in both systems although solid residence time in the fixed bed is clearly longer than that in the reactor according to the invention.

In addition, a more severe cracking of the primary pyrolysis products occurs in the reactor according to the invention due to the faster heating rate and the longer gas residence time.

Table 1: Proximate and ultimate analyses of the rubber tire and the char obtained in waste tire pyrolysis (as received basis).

|  | rubber tire | fixed bed reactor | My design reactor |
|---|---|---|---|
| C (%w) | 81.72 | 81.57 | 82.1D |
| H (%w) | 6.54 | 0.84 | 0.97 |
| S (%w) | 1.87 | 2.95 | 1.41 |
| N (%w) | 0.55 | 0.33 | 0.35 |
| % ash | 6.64 | 13.82 | 8.17 |
| % moisture | 0.71 | 0.26 | 1.24 |
| % volatile matter | 62.58 | 2.51 | 1.50 |

In the above table 1, with "my design reactor" it is meant the reactor according to the invention.

Total rubber conversion is achieved in both systems, although solid residence time in the fixed bed reactor (30 minutes) is clearly longer than in the reactor according to the invention (3.7 minutes).

A considerable production of liquid has been obtained in the reactor according to the invention compared to the fixed bed reactor.

Regarding the reactor according to the invention, it is important to point out that the experiment has been completely satisfactory, and no problem was detected working during such a long time (8 hours).

Furthermore, in the reactor according to the invention a more severe cracking of the pyrolysis products occurs.

The feeding of the raw material and the extraction of the products in the reactor according to the invention has been carried out continuously during the experiment without altering the conditions and the inert atmosphere inside the reactor.

This fact confirms the appropriate design of such a complex installation.

In the following, the above mentioned catalysts are described in greater detail. There is a zeolite catalyst having a Mordenite framework inverted (MFI) structure and an average intracrystal mesopore size of in the range from about 2.0 to about 4.5 nm, characterized by:

- an average mesopore volume in the range from about 0.1 $cm^3/g$ to about 0.2 $cm^3/g$.

Preferably, this catalyst has an average intracrystal mesopore size of in the range from about 2.1 to about 2.5 nm.

Preferably, the fourth aspect of the present invention has an average mesopore volume in the range from about 0.12, more preferably 0.15 $cm^3/g$ to about 0.2 $cm^3/g$.

Preferably, this catalyst is further characterized by:

- a micropore size distribution in the range from about 1.0 to about 1.5 nm width at half maximum height, and/or
- a BET surface area in the range from about 310 to about 650 $m^2/g$ (as determined by BJH pore volume analysis), and/or

- an average micropore volume in the range from about 0.05 to about 0.15 $cm^3/g$.

Preferably, this catalyst has a BET surface area in the range from about 310 $m^2/g$ to about 450, more preferably to about 400 $m^2/g$.

Preferably, this catalyst further comprises Molibdenum (Mo) or Platinum (Pt) as dehydrogenating metal; more preferably Mo is in an amount from 0.1 to 3 mol % relative to aluminum content.

This catalyst can be a zeolite catalyst having having a Mordenite framework inverted (MFI) structure and an average intracrystal mesopore size of in the range from about 2.0 to about 4.5 nm, preferably in the range from about 2.1 to about 2.5 nm, characterized by:

- an average mesopore volume in the range from about 0.1 $cm^3/g$ to about 0.2 $cm^3/g$, preferably from about 0.12, more preferably 0.15 $cm^3/g$ to about 0.2 $cm^3/g$,
- a micropore size distribution in the range from about 1.0 to about 1.5 nm width at half maximum height,
- a BET surface area in the range from about 310 to about 650 $m^2/g$, preferably from about 310 $m^2/g$ to about 450, more preferably 400 $m^2/g$, and
- an average micropore volume in the range from about 0.05 to about 0.15 $cm^3/g$.

This catalyst can be a zeolite catalyst having having a Mordenite framework inverted (MFI) structure and an average intracrystal mesopore size of in the range from about 2.0 to about 4.5 nm, preferably in the range from about 2.1 to about 2.5 nm,
characterized by:

- an average mesopore volume in the range from about 0.1 $cm^3/g$ to about 0.2 $cm^3/g$, preferably from about 0.12, more preferably 0.15 $cm^3/g$ to about 0.2 $cm^3/g$,
- a micropore size distribution in the range from about 1.0 to about 1.5 nm width at half maximum height,
- a BET surface area in the range from about 310 to about 650 $m^2/g$, preferably from about 310 $m^2/g$ to about 450, more preferably 400 $m^2/g$,
- an average micropore volume in the range from about 0.05 to about 0.15 $cm^3/g$, and
- further comprising Molibdenum (Mo) or Platinum (Pt) in an amount from 0.1 to 3 mol % relative to aluminum content.

Further described is a zeolite catalyst having a Chabazite (CHA) structure and an average intracrystal mesopore size of in the range from about 2.0 to about 4.5 nm,
characterized by:

- an average micropore volume in the range from about 0.05 to about 0.15 $cm^3/g$.

Preferably, this catalyst has an average intracrystal mesopore size of in the range from about 2.1 to about 2.5 nm.

Preferably, this catalyst has an average micropore volume in the range from about 0.06 to about 0.10, more preferably 0.12 $cm^3/g$.

Preferably, this catalyst is further characterized by

- a micropore size distribution in the range from about 1.0 to about 1.5 nm width at half maximum height, and/or
- a BET surface area in the range from about 310 to about 650 $m^2/g$ (as determined by BJH pore volume analysis), and/or
- an average mesopore volume in the range from about 0.10 to about 1.0 $cm^3/g$.

Preferably, this catalyst has a BET surface area in the range from about 310 $m^2/g$ to about 450, more preferably 400 $m^2/g$.

Preferably, this catalyst has an average mesopore volume in the range from about 0.2, more preferably 0.4 $cm^3/g$ to about 0.6, more preferably 0.8 $cm^3/g$.

Preferably, this catalyst further comprises Molibdenum (Mo) or Platinum (Pt) as dehydrogenating metal; more preferably Mo is in an amount from 0.1 to 3 mol % relative to aluminum content.

This catalyst may be a zeolite catalyst having a Chabazite (CHA) structure and an average intracrystal mesopore size of in the range from about 2.0 to about 4.5 nm, preferably in the range from about 2.1 to about 2.5 nm,
characterized by:

- an average micropore volume in the range from about 0.05 to about 0.15 $cm^3/g$, preferably in the range from about 0.06 to about 0.10, more preferably 0.12 $cm^3/g$,

- a micropore size distribution in the range from about 1.0 to about 1.5 nm width at half maximum height,
- a BET surface area in the range from about 310 to about 650 m$^2$/g, preferably in the range from about 310 m$^2$/g to about 450, more preferably 400 m$^2$/g.
- an average mesopore volume in the range from about 0.10 to about 1.0 cm$^3$/g, preferably in the range from about 0.2, more preferably 0.4 cm$^3$/g to about 0.6, more preferably 0.8 cm$^3$/g.

This catalyst may be a zeolite catalyst having a Chabazite (CHA) structure and an average intracrystal mesopore size of in the range from about 2.0 to about 4.5 nm, preferably in the range from about 2.1 to about 2.5 nm, characterized by:

- an average micropore volume in the range from about 0.05 to about 0.15 cm$^3$/g, preferably in the range from about 0.06 to about 0.10, more preferably 0.12 cm$^3$/g.
- a micropore size distribution in the range from about 1.0 to about 1.5 nm width at half maximum height,
- a BET surface area in the range from about 310 to about 650 m$^2$/g, preferably in the range from about 310 m$^2$/g to about 450, more preferably 400 m$^2$/g.
- an average mesopore volume in the range from about 0.10 to about 1.0 cm$^3$/g, preferably in the range from about 0.2, more preferably 0.4 cm$^3$/g to about 0.6, more preferably 0.8 cm$^3$/g.
- further comprising Molibdenum (Mo) or Platinum (Pt) in an amount from 0.1 to 3 mol % relative to aluminum content.

Further described is a zeolite catalyst having sixth a) a Mordenite framework inverted (MFI) or sixth b) a Chabazite (CHA) structure and an average intracrystal mesopore size of in the range from about 2.0 to about 4.5 nm, characterized by

- further comprising Molybdenum (Mo) or Platinum (Pt) as dehydrogenating metal.

This catalyst may be a zeolite catalyst having sixth a) a Mordenite framework inverted (MFI) or sixth b) a Chabazite (CHA) structure and an average intracrystal mesopore size of in the range from about 2.0 to about 4.5 nm, characterized by

- further comprising Molybdenum (Mo) or Platinum (Pt) in an amount from 0.1 to 3 mol % relative to aluminum content.

The zeolites described here for use in the present invention may be used in the form of powders, including powders consisting wholly or in part of single crystals, or the zeolite may instead be incorporated in shaped agglomerates, for example, tablets, extrudates or spheres, which may be obtained by combining the zeolite with a binder material that is substantially inert under the conditions employed in the process.

The zeolite catalyst may be present in amount from about 1 to about 99% by weight, based on the combined weight of the zeolite and binder material. As binder material, any suitable material may be used, for example, silica, metal oxides, or clays, such as montmorillonite, bentonite and kaolin clays, the clays optionally being calcined or modified chemically prior to use. Further examples of suitable matrix materials include silica-alumina, silica-berylia, silica-magnesia, silica-thoria, silica-titania, silica-alumina¬magnesia, silica-alumina-thoria, silica-alumina-zirconia and silica-magnesia-zirconia.

The Applicant has made a special treatment of the zeolite catalyst using a NaOH solution, thus decreasing the Si/Al ratio of the catalyst without altering the total acidity, determined by NH3-TPD. As a consequence of the severe treatment with NaOH, the catalyst lifetime of the zeolites of the present invention, quantified as the total conversion capacity, increased by a factor of 3.3 over known zeolites, thus improving their catalytic performance.

Further described is the preparation of the zeolite catalyst first described in detail above or a composition comprising the same.

It comprises the following steps:

(a) preparing a zeolite synthesis gel having a Mordenite framework inverted (MFI) structure ,
(b) treating the resultant gel with a solution of NaOH,
(c) adding a mesopore generator and crystallizing the resultant mixture,
(d) calcining the resultant crystallized mixture,
optionally
(e) protonating the obtained mesoporous zeolite and/or
(f) loading Molybdenum or Platinum

wherein the obtained zeolite catalyst has an average intracrystal mesopore size in the range from about 2.0 to about 4.5 nm and an average mesopore volume in the range from about 0.1 $cm^3$/g to about 0.2 $cm^3$/g.

Also described is the preparation of the zeolite catalyst described as second in detail above or a composition comprising the same. This preparation comprises the following steps:

(a) preparing a zeolite synthesis gel having a Chabazite (CHA) structure,
(b) treating the resultant gel with a solution of NaOH,
(c) adding a mesopore generator and crystallizing the resultant mixture,
(d) calcining the resultant crystallized mixture,
optionally
(e) protonating the obtained mesoporous zeolite and/or
(f) loading Molybdenum or Platinum

wherein the obtained zeolite catalyst has an average intracrystal mesopore size in the range from about 2.0 to about 4.5 nm and an average micropore volume in the range from about 0.05 to about 0.15 $cm^3$/g.

Further described is the preparation of the zeolite catalysts described third above in detail, or a composition comprising the same. This preparation comprises the following steps:

(a) preparing a zeolite synthesis gel having a MFI or CHA structure
(b) treating the resultant gel with a solution of NaOH,
(c) adding a mesopore generator and crystallizing the resultant mixture,
(d) calcining the resultant crystallized mixture optionally
(e) protonating the obtained mesoporous zeolite, and
(f) loading Molybdenum or Platinum

wherein the obtained zeolite catalyst has the correspondent Mordenite framework inverted (MFI) or a Chabazite (CHA) structure and an average intracrystal mesopore size of in the range from about 2.0 to about 4.5 nm.

The zeolite synthesis gel used in step (a) is known to those of ordinary skill in the art.

Preferably, the zeolite synthesis gel used in step (a) of the first and third above described preparation leading to the MFI structure, is formed by preparing a solution of 1.0 M tetrapolyammonium hydroxide solution (TPAOH), a known structure directing agent for the MFI structure, and then adding the solution to a mixture of tetraethoxysilane (TEOS) and aluminum isopropoxide.

Preferably, the zeolite synthesis gel used in step (a) of the second and third preparation as described above leading to the CHA structure, is formed by preparing a solution 1.0 M of N, N, N-trimethyl-1-adamantan-ammonium hydroxide (TMAdaOH), a known structure directing agent for the CHA structure, and then adding the solution to a mixture of tetraethoxysilane (TEOS) and aluminum isopropoxide.

Preferably the NaOH solution used in step (b) is from 0.05 to 0.12 M; preferably the treatment is made at a Temperature from about 70 to about 80°C, and for a time from about 2 to about 4 hour.

Preferably the mesopore generator used in step (c) is a surfactant containing a bulky mono-quaternary ammonium head group in the form of N-methylpiperidine and a tail group; suitable tail groups of said surfactants may be $C_1$-$C_{18}$ alkyl groups; preferably, the tail group is a cetyl ($C_{16}$) group. Said surfactants can be synthetized by methods well known to the expert in the art.

In step (c) the cystallizing may be carried out at a Temperature from about 100 to 150°C for a time comprised from 0.5 hours to 24 hours.

The calcining step (d) may be carried out under air increasing the temperature from ambient conditions to 600°C over a period of 3 to 5 hours, preferably 4 hours; in alternative, the calcining step (d) may be first carried out under a nitrogen atmosphere at 400°C for 4 hours followed by a second calcination step under air at 600°C over a period of 3 to 5 hours, preferably 4 hours. Preferably, the calcination step removes the mesopore generator from the zeolite pores.

The protonating step (e) may be carried out by any suitable methods well known in the art. For example, it may be carried out by treatment with ammonium nitrate solution, preferably 10% ammonium nitrate, or by refluxing in a dilute HCl solution, preferably 20% - 5%, more preferably 10% HCl by volume.

The zeolite may be fully protonated, i.e. substantially all acid sites are in proton form or they may be partially protonated. A mixture of fully protonated and partially protonated catalysts may be used.

The Metal-loading step (f) may be carried out by any suitable methods well known in the art. For example, it may be carried out impregnating the zeolite with the metal by the incipient wetness method, which comprises the steps of a) dissolving a metal precursor in an aqueous or organic solution, b) obtaining zeolites, c) applying the solution to the zeolites and then d) calcining the zeolites to obtain metal-loaded mesoporous zeolite catalysts. Preferably, the volume of solution applied is comparable to the total pore volume of the zeolites being impregnated, the solution is thereby drawn into the pores by capillary action. Optionally, the zeolites to be impregnated are first protonated, as discussed above.

Preferably the metal loading is carried out as described in Catalyst, 2015, 5, 88-105. With the aim to better illustrate the present invention, the following examples are now furnished.

Examples

Example 1: preparation of a zeolite catalyst having Mordenite framework inverted structure (MFI)

The zeolite synthesis gel was formed by preparing a solution 1.0 M of tetrapolyammonium hydroxide (TPAOH), a known structure directing agent for theMFI structure, and then adding the solution to a mixture of tetraethoxysilane (TEOS) and aluminum isopropoxide under vigorous stirring, to obtain a gel with the molar composition of approximately 1 $SiO_2$: 0.012 $Al_2O_3$: 0.37 TPAOH: 20 $H_2O$: 4 EtOH: 0.10.

In step (b) the zeolite gel was treated with a solution of NaOH from 0.05 to 0.12 M; at a Temperature of about 75°C, for about 3 hour. XRD confirmed the retention of crystallinity.

In step (c) the amphiphilic surfactant cetyl N-methylpiperididinium was used as mesopore generator adding it to the zeolite synthesis gel prepared as described above; the resultant mixture was crystallized in a Teflon-lined autoclave at 100 to 150°C for 0.5 to 24 hours under static conditions.

This surfactant was synthetized as described in Zhu, X et al., Chem. Commun. 2014, 50, 14658-61, in a single step from cheap starting chemicals, that is by reacting 1-bromohexadecane with N-methylpiperidine.

In step (d) the product was washed, air-dried, and calcined at 600°C for 4 hours to remove the mesoporogen. Two different calcination methods were applied. In the first method, the catalyst was calcined under air increasing the temperature from ambient conditions to 600°C for 4 h. In the second calcination treatment, the catalyst was subjected first to a nitrogen atmosphere at 400°C for 4 h followed by a second calcination step under air at 600°C for 4 h.

In step (e) the zeolite was converted to the protonated forms by refluxing the calcinated zeolite in 10% HCl for 12h and then washed thoroughly to remove any trace of chlorides, confirmed using silver nitrate solution. In another variation of this method, calcined zeolites may be treated with 10 % ammonium nitrate solution at 80°C for 12 hours, twice, and then the product was calcined in air at 600°C for 4 hours.

Example 2: preparation of a zeolite catalyst having Chabazite (CHA) structure

The zeolite synthesis gel is formed by preparing a solution 1.0 M of N, N, N-trimethyl-1-adamantan-ammonium hydroxide (TMAdaOH), a known structure directing agent for the CHA structure, and then adding the solution to a mixture of tetraethoxysilane (TEOS) and aluminum isopropoxide under vigorous stirring, to obtain a gel with the molar composition of approximately 1 $SiO_2$: 0.012 $Al_3O_3$: 0.37 TMAdaOH: 20 $H_2O$: 4 EtOH: 0.10.

In step (b) the zeolite gel was treated with a solution of NaOH from 0.05 to 0.12 M; at a Temperature of about 75°C, for about 3 hour. XRD confirmed the retention of crystallinity.

In step (c) the amphiphilic surfactant cetyl N-methylpiperididinium was used as mesopore generator adding it to the zeolite synthesis gel prepared as described above; the resultant mixture was crystallized in a Teflon-lined autoclave at 100 to 150°C for 0.5 to 24 hours under static conditions.

This surfactant was synthetized as described in Zhu, X et al., cited above.

In step (d) the product was washed, air-dried, and calcined at 600°C for 4 hours to remove the mesoporogen. Two different calcination methods were applied. In the first method, the catalyst was calcined under air increasing the temperature from ambient conditions to 600°C for 4 h. In the second calcination treatment, the catalyst was subjected first to a nitrogen atmosphere at 400°C for 4 h followed by a second calcination step under air at 600°C for 4 h.

In step (e) the zeolite was converted to the protonated forms by refluxing the calcinated zeolite in 10% HCl for 12h and then washed thoroughly to remove any trace of chlorides, confirmed using silver nitrate solution. In another variation of this method, calcined zeolites may be treated with 10 % ammonium nitrate solution at 80°C for 12 hours, twice, and then the product was calcined in air at 600°C for 4 hours.

Example 3: preparation of a molybdenum-loaded zeolite catalyst having Mordenite framework inverted (MFI) structure

The Mesoporous MFI zeolite catalysts prepared as described in Example 1 was doped with molybdenum in the form of aqueous molybdenum nitrate using the incipient wetness method.

Molibdenum loaded catalysts (0.25, 0.5, 1, 2, 3 mol % relative to aluminum content) were prepared as described in V. Shetti, J. Kim, R. Srivastava, M. Choi, and R. Ryoo, Journal of Catalysis, vol. 254, no. 2, pp. 296-303, Mar. 2008.

Example 4: preparation of a molybdenum-loaded zeolite catalyst having Chabazite (CHA) structure

The Mesoporous CHA zeolite catalysts prepared as described in Example 2 was doped with molybdenum in the form of aqueous molybdenum nitrate using the incipient wetness method.

Molibdenum loaded catalysts (0.25, 0.5, 1, 2, 3 mol % relative to aluminum content) were prepared as described in V. Shetti, J. Kim, R. Srivastava, M. Choi, and R. Ryoo, Journal of Catalysis, vol. 254, no. 2, pp. 296-303, Mar. 2008.

Example 5: preparation of a platinum-loaded zeolite catalyst

Pt-loaded zeolite catalysts is prepared as described by Toshiaki Hanaoka, in Catalysts 2015, 5, 88-105, using a w/o microemulsion as follows.

Polyoxyethylene cetylether was used as a surfactant, n-hexadecane as an organic solvent.

An aqueous solution of $H_2PtCl_6$ (0.02 mol $\cdot L^{-1}$) was used as a starting material for the Pt particles. Pt particles were synthesized in the liquid phase and subsequently immobilized onto zeolite supports. The synthesis and immobilization were performed at 45 °C. The molar ratio of water to surfactant was 6. The Pt metal particles in the microemulsion were reduced from $Pt^{4+}$ by adding hydrazine monohydrate as a reducing agent to the microemulsion system consisting of Union 67-55R/n-hexadecane/aqueous $H_2PtCl_6$ (100 mL). The molar ratio of $N_2H_4$ to $Pt^{4+}$ was 80.

For synthesis of the Pt complex particles in the liquid phase, hexyltrimethylammonium bromide was used as complex-forming agent, in alternative tetraethylammonium chloride, tetrapropylammonium bromide, and hexadecyltrimethylammonium chloride may be employed.

The particles were immobilized on the zeolite support with stirring by adding zeolite powder, prepared as described in Example 1 and 2, ethanol, and aqueous NH3 to the liquid phase containing the particles.

Example 6: Characterization of the zeolites prepared in Examples 1-5

The zeolites prepared in Example 1-5 were characterized for number and strength of active sites using BET surface area and BJH pore volume analysis. Surface area measurements and pore size distribution analysis were done by nitrogen adsorption at 195 °C (78 K) in a Micromeritics ASAP 2010 instrument. Prior to measurements, the sample was out-gassed in the degas port of the apparatus at 220°C for 24 h. The surface area originating from the framework micropores of the zeolite was determined from t- plots of the nitrogen adsorption data. The XRD patterns were recorded on a Rigaku Rotaflex Diffractometer using CuKa radiation (k=1.542A°). The Si and Al content for catalysts was determined by inductively coupled plasma (ICP) analysis performed by Galbraith Laboratories (Knoxville, TN). X-ray photoelectron spectroscopy was performed on a Perkin Elmer Phi 5400 ESCA system equipped with a Magnesium Ka x-ray source. Samples were analyzed at pressures between 10-9 and 10-8 torr with a pass energy of 58.7 eV and a take-off angle of 45°.

X-ray diffraction was used to compare the structure of zeolites crystals.

**Claims**

1. Pyrolysis process to extract pyrolysis oil comprising the steps of:

   - feeding a batch of waste materials in a plasma pyrolysis reactor (4), the batch comprising organic and/or inorganic origin waste materials,
   - generating a plasma arc inside a reactor chamber for carrying out the pyrolysis reaction,
   - calculating a target temperature of the plasma arc as a function of one or more parameters of the organic and/or inorganic origin waste materials,
   - controlling the temperature of the plasma arc such as to maintain the actual temperature of the plasma arc at the target temperature,
   - extracting pyrolysis oil from the reactor (4);

   wherein the step of calculating the target temperature of the plasma arc is carried out as a function of a reactor efficiency; wherein the reactor efficiency is the ratio between the difference of the weight of the batch fed in the reactor and the weight of leftover slag after batch processing to the weight of the batch fed in the reactor; wherein the reactor efficiency is retrieved in a database (18) containing reactor efficiencies of previous pyrolysis processes of said reactor (4);
   and/or
   wherein the step of calculating the target temperature of the plasma arc is carried out as a function of an efficiency of pyrolytic output; wherein the efficiency of pyrolytic output is calculated as the ratio between the weight of material converted to pyrolysis oil, or the weight of the pyrolysis oil, and the weight of the batch fed in the reactor; wherein the efficiency of pyrolytic output is retrieved in a database (18) containing efficiencies of pyrolysis of previous pyrolysis processes of said reactor (4).

**2.** The process of claim 1, wherein the parameters of the organic and/or inorganic origin waste materials comprise at least carbohydrate density.

**3.** The process of claim 1 or 2, wherein the parameters of the organic and/or inorganic origin waste materials relate at least to types of polymers.

**4.** The process of the preceding claim, wherein the parameters of the organic and/or inorganic origin waste materials comprise a polymer average chain length.

**5.** The process of the preceding claim, wherein the polymer average chain length is calculated by:

- identifying the types of polymers,
- retrieving in the database (18) the average chain length of each type of polymer,
- calculating the polymer average chain length of the batch.

**6.** The process of any of the preceding claims, wherein the temperature of the plasma arc is controlled by regulating one or more parameters of a plasma forming device (10), for example the voltage and/or the amperage and/or the frequency and/or the pressure of a plasma forming gas.

**7.** The process of any of the preceding claims, comprising, after the batch processing, the step of storing data of the batch processing in the database (18) operatively connected to the reactor (4), wherein the stored data comprise at least: reactor efficiency and/or efficiency of pyrolytic output of the process.

**8.** The process of the preceding claim, comprising updating the data already contained in the database (18) with the stored data of the batch processing.

**9.** The process of claim 1, wherein an algorithm for calculating the target temperature of the plasma arc is according to the following equation: $T = \theta * E_p(B) * B_p * B * \xi$; wherein T is the target temperature of the plasma arc in Celsius, $\theta$ is the reactor efficiency, $E_p(B)$ is the efficiency of pyrolytic output, $B_p$ is the batch profile, B is the weight of the batch in kilograms, $\xi$ is a proprietary logarithmic function; wherein the batch profile is a function of a polymer average chain length of the batch and of a carbohydrate density of the batch.

**10.** Plasma pyrolysis reactor (4) comprising:

- a reactor body (8) defining a reactor chamber,
- an inlet (9) for feeding the batch in the reactor chamber,
- a plasma forming device (10), such as a plasma torch, configured for generating a plasma arc inside the reactor chamber,
- a control unit (17) configured for: calculating a target temperature of the plasma arc as a function of one or more parameters of organic and/or inorganic origin waste materials, and controlling the temperature of the plasma arc such as to maintain the actual temperature of the plasma arc at the target temperature,
- one outlet (11) for the exit of the pyrolysis oil from the reactor chamber

wherein the control unit (17) is configured for calculating the target temperature of the plasma arc as a function of the reactor efficiency; wherein the reactor efficiency is the ratio between the difference of the weight of the batch fed in the reactor (4) and the weight of leftover slag after batch processing to the weight of the batch fed in the reactor (4); wherein the control unit (17) is configured for retrieving the reactor efficiency in a database (18) containing reactor efficiencies of previous pyrolysis processes of said reactor (4);
and/or
wherein the control unit (17) is configured for calculating the target temperature of the plasma arc as a function of the efficiency of pyrolytic output; wherein the efficiency of pyrolytic output is calculated as the ratio between the weight of material converted to pyrolysis oil, or the weight of the pyrolysis oil, and the weight of the batch fed in the reactor (4); wherein the control unit (17) is configured for retrieving the efficiency of pyrolytic output in a database (18) containing efficiencies of pyrolytic output of previous pyrolysis processes of said reactor (4).

**11.** Reactor according to the preceding claim, comprising the database (18) operatively connected to the control unit (17) and configured for storing data of the batch processing, wherein the stored data comprise at least: the reactor efficiency and/or the efficiency of pyrolytic output.

**12.** Reactor according to claim 10 or 11, wherein the reactor (4) comprises a temperature sensor (21) for measuring the temperature of the plasma arc.

**13.** Reactor according to claim 10 or 11 or 12, wherein the reactor (4) comprises sensors (19) for identifying types of polymers, said sensors (19) being placed upstream the reactor chamber.

**14.** Reactor according to any of claims from 10 to 13, wherein the reactor (4) comprises sensors (20) for measuring the carbohydrate density, said sensors (20) being placed upstream the reactor chamber.

**15.** Reactor according to any of claims from 10 to 14, further comprising:

- a zeolite catalyst having a Mordenite framework inverted (MFI) structure and an average intracrystal mesopore size of in the range from about 2.0 to about 4.5 nm, **characterized by** an average mesopore volume in the range from about 0.1 $cm^3$/g to about 0.2 $cm^3$/g, or
- a zeolite catalyst having a Chabazite (CHA) structure and an average intracrystal mesopore size of in the range from about 2.0 to about 4.5 nm, **characterized by** an average micropore volume in the range from about 0.05 to about 0.15 $cm^3$/g , or
- a zeolite catalyst having a Mordenite framework inverted (MFI) or a Chabazite (CHA) structure and an average intracrystal mesopore size of in the range from about 2.0 to about 4.5 nm, **characterized by** further comprising molybdenum (Mo) or Platinum (Pt) as dehydrogenating metal.

**Patentansprüche**

**1.** Pyrolyseverfahren zum Extrahieren von Pyrolyseöl, umfassend die folgenden Schritte:

- Einführen einer Ladung von Abfallmaterialien in einen Plasmapyrolysereaktor (4), wobei die Ladung Abfallmaterialien organischen und/oder anorganischen Ursprungs umfasst,
- Erzeugen eines Plasmabogens innerhalb einer Reaktorkammer zum Ausführen der Pyrolysereaktion,
- Berechnen einer Zieltemperatur des Plasmabogens als eine Funktion eines oder mehrerer Parameter der Abfallmaterialien organischen und/oder anorganischen Ursprungs,
- Steuern/Regeln der Temperatur des Plasmabogens derart, dass die tatsächliche Temperatur des Plasmabogens bei der Zieltemperatur gehalten wird,
- Extrahieren von Pyrolyseöl aus dem Reaktor (4);

wobei der Schritt des Berechnens der Zieltemperatur des Plasmabogens als eine Funktion eines Reaktorwirkungsgrads ausgeführt wird; wobei der Reaktorwirkungsgrad das Verhältnis zwischen der Differenz des Gewichts der in den Reaktor eingeführten Ladung und des Gewichts von nach einer Ladungsverarbeitung übriggebliebener Schlacke zu dem Gewicht der in den Reaktor eingeführten Ladung berechnet wird; wobei der Reaktorwirkungsgrad in eine Datenbank (18) geladen wird, welche Reaktorwirkungsgrade vorheriger Pyrolyseverfahren des Reaktors (4) enthält; und/oder

wobei der Schritt des Berechnens der Zieltemperatur des Plasmabogens als eine Funktion eines Wirkungsgrads pyrolytischer Leistung ausgeführt wird; wobei der Wirkungsgrad pyrolytischer Leistung als das Verhältnis zwischen dem Gewicht von zu Pyrolyseöl umgewandeltem Material, oder dem Gewicht des Pyrolyseöls, und dem Gewicht der in den Reaktor eingeführten Ladung berechnet wird; wobei der Wirkungsgrad pyrolytischer Leistung in eine Datenbank (18) geladen wird, welche Wirkungsgrade von Pyrolysen vorheriger Pyrolyseverfahren des Reaktors (4) enthält.

**2.** Verfahren nach Anspruch 1, wobei die Parameter der Abfallmaterialien organischen und/oder anorganischen Ursprungs wenigstens eine Kohlenhydratdichte umfassen.

**3.** Verfahren nach Anspruch 1 oder 2, wobei sich die Parameter der Abfallmaterialien organischen und/oder anorganischen Ursprungs wenigstens auf Polymertypen beziehen.

**4.** Verfahren nach dem vorhergehenden Anspruch, wobei die Parameter der Abfallmaterialien organischen und/oder anorganischen Ursprungs eine mittlere Polymerkettenlänge umfassen.

**5.** Verfahren nach dem vorhergehenden Anspruch, wobei die mittlere Polymerkettenlänge berechnet wird durch:

- Identifizieren der Polymertypen,
- Laden der mittleren Kettenlänge jedes Polymertyps in die Datenbank (18),
- Berechnen der mittleren Polymerkettenlänge der Ladung.

6. Verfahren nach einem der vorhergehenden Ansprüche, wobei die Temperatur des Plasmabogens gesteuert/geregelt wird, indem ein oder mehrere Parameter einer Plasmabildungsvorrichtung (10), zum Beispiel die Spannung und/oder die Stromstärke und/oder die Frequenz und/oder der Druck eines Plasmabildungsgases, reguliert werden.

7. Verfahren nach einem der vorhergehenden Ansprüche, umfassend, nach der Ladungsverarbeitung, den Schritt eines Speicherns von Daten der Ladungsverarbeitung in der Datenbank (18), welche betriebsmäßig mit dem Reaktor (4) verbunden ist, wobei die gespeicherten Daten wenigstens umfassen:
einen Reaktorwirkungsgrad und/oder einen Wirkungsgrad pyrolytischer Leistung des Verfahrens.

8. Verfahren nach dem vorhergehenden Anspruch, umfassend ein Aktualisieren der bereits in der Datenbank (18) enthaltenen Daten mit den gespeicherten Daten der Ladungsverarbeitung.

9. Verfahren nach Anspruch 1, wobei ein Algorithmus zum Berechnen der Zieltemperatur des Plasmabogens der folgenden Gleichung entspricht:
$T = \theta * E_p(B) * B_p * B * \xi$; wobei T die Zieltemperatur des Plasmabogens in Celsius ist, $\theta$ der Reaktorwirkungsgrad ist, $E_p(B)$ der Wirkungsgrad pyrolytischer Leistung ist, $B_p$ das Ladungsprofil ist, B das Gewicht der Ladung in Kilogramm ist, $\xi$ eine eigene logarithmische Funktion ist; wobei das Ladungsprofil eine Funktion einer durchschnittlichen Polymerkettenlänge der Ladung und einer Kohlenhydratdichte der Ladung ist.

10. Plasmapyrolysereaktor (4), umfassend:

- einen Reaktorkörper (8), welcher eine Reaktorkammer definiert,
- einen Einlass (9) zum Einführen der Ladung in die Reaktorkammer,
- eine Plasmabildungsvorrichtung (10), wie etwa einen Plasmabrenner, welche dazu eingerichtet ist, einen Plasmabogen innerhalb der Reaktorkammer zu erzeugen,
- eine Steuer-/Regeleinheit (17), welche eingerichtet ist zum: Berechnen einer Zieltemperatur des Plasmabogens als eine Funktion eines oder mehrerer Parameter von Abfallmaterialien organischen und/oder anorganischen Ursprungs und Steuern/Regeln der Temperatur des Plasmabogens derart, dass die tatsächliche Temperatur des Plasmabogens bei der Zieltemperatur gehalten wird,
- einen Auslass (11) für den Austritt des Pyrolyseöls aus der Reaktorkammer, wobei die Steuer-/Regeleinheit (17) dazu eingerichtet ist, die Zieltemperatur des Plasmabogens als eine Funktion des Reaktorwirkungsgrads zu berechnen; wobei der Reaktorwirkungsgrad das Verhältnis zwischen der Differenz des Gewichts der in den Reaktor (4) eingeführten Ladung und des Gewichts von nach einer Ladungsverarbeitung übriggebliebener Schlacke zu dem Gewicht der in den Reaktor (4) eingeführten Ladung ist; wobei die Steuer-/Regeleinheit (17) dazu eingerichtet ist, den Reaktorwirkungsgrad in eine Datenbank (18) zu laden, welche Reaktorwirkungsgrade vorheriger Pyrolyseverfahren des Reaktors (4) enthält;

und/oder
wobei die Steuer-/Regeleinheit (17) dazu eingerichtet ist, die Zieltemperatur des Plasmabogens als eine Funktion des Wirkungsgrads pyrolytischer Leistung zu berechnen; wobei der Wirkungsgrad pyrolytischer Leistung Verhältnis zwischen dem Gewicht von zu Pyrolyseöl umgewandeltem Material, oder dem Gewicht des Pyrolyseöls, und dem Gewicht der in den Reaktor (4) eingeführten Ladung berechnet wird; wobei die Steuer-/Regeleinheit (17) dazu eingerichtet ist, den Wirkungsgrad pyrolytischer Leistung in eine Datenbank (18) zu laden, welche Wirkungsgrade pyrolytischer Leistung vorheriger Pyrolyseverfahren des Reaktors (4) enthält.

11. Reaktor nach dem vorhergehenden Anspruch, umfassend die Datenbank (18), welche betriebsmäßig mit der Steuer-/Regeleinheit (17) verbunden ist und dazu eingerichtet ist, Daten der Ladungsverarbeitung zu speichern, wobei die gespeicherten Daten wenigstens umfassen: den Reaktorwirkungsgrad und/oder den Wirkungsgrad pyrolytischer Leistung.

12. Reaktor nach Anspruch 10 oder 11, wobei der Reaktor (4) einen Temperatursensor (21) zum Messen der Temperatur des Plasmabogens umfasst.

13. Reaktor nach Anspruch 10 oder 11 oder 12, wobei der Reaktor (4) Sensoren (19) zum Identifizieren von Polymertypen umfasst, wobei die Sensoren (19) der Reaktorkammer vorgelagert platziert sind.

**14.** Reaktor nach einem der Ansprüche 10 bis 13, wobei der Reaktor (4) Sensoren (20) zum Messen der Kohlenhydratdichte umfasst, wobei die Sensoren (20) der Reaktorkammer vorgelagert platziert sind.

**15.** Reaktor nach einem der Ansprüche 10 bis 14, ferner umfassend:

- einen Zeolithkatalysator, welcher eine Struktur mit invertiertem Mordenitgitter (MFI - Mordenite framework inverted) und eine mittlere Intrakristall-Mesoporengröße in dem Bereich von etwa 2,0 bis etwa 4,5 nm aufweist, **gekennzeichnet durch** ein mittleres Mesoporenvolumen in dem Bereich von etwa 0,1 cm$^3$/g bis etwa 0,2 cm$^3$/g, oder
- einen Zeolithkatalysator, welcher eine Chabazit- (CHA) -Struktur und eine mittlere Intrakristall-Mesoporengröße in dem Bereich von etwa 2,0 bis etwa 4,5 nm aufweist, **gekennzeichnet durch** ein mittleres Mikroporenvolumen in dem Bereich von etwa 0,05 bis etwa 0,15 cm$^3$/g, oder
- einen Zeolithkatalysator, welcher eine Struktur mit invertiertem Mordenitgitter (MFI - Mordenite framework inverted) oder eine Chabazit-(CHA) -Struktur und eine mittlere Intrakristall-Mesoporengröße in dem Bereich von etwa 2,0 bis etwa 4,5 nm aufweist, **dadurch** gekennzeichnet, dass er ferner Molybdän (Mo) oder Platin (Pt) als dehydrierendes Metall umfasst.

## Revendications

**1.** Procédé de pyrolyse pour l'extraction d'huile de pyrolyse comprenant les étapes de :

- alimentation d'un lot de matériaux déchets dans un réacteur de pyrolyse à plasma (4), le lot comprenant des matériaux déchets d'origine organique et/ou inorganique,
- génération d'un arc de plasma à l'intérieur d'une chambre réactionnelle pour réaliser la réaction de pyrolyse,
- calcul d'une température cible de l'arc de plasma comme une fonction d'un ou plusieurs paramètres des matériaux déchets d'origine organique et/ou inorganique,
- contrôle de la température de l'arc de plasma afin de maintenir la température réelle de l'arc de plasma à la température cible,
- extraction de l'huile de pyrolyse du réacteur (4) ;

l'étape de calcul de la température cible de l'arc de plasma étant réalisée comme une fonction d'une efficacité du réacteur ; l'efficacité du réacteur étant le rapport entre la différence du poids du lot alimenté dans le réacteur et du poids du laitier restant après le traitement du lot au poids du lot alimenté dans le réacteur ; l'efficacité du réacteur étant récupérée dans une base de données (18) contenant les efficacités de réacteur de procédés de pyrolyse antérieurs dudit réacteur (4) ; et/ou
l'étape de calcul de la température cible de l'arc de plasma étant réalisée comme une fonction d'une efficacité du produit pyrolytique ; l'efficacité du produit pyrolytique étant calculée comme le rapport entre le poids du matériau converti en huile de pyrolyse, ou le poids de l'huile de pyrolyse, et le poids du lot alimenté dans le réacteur ; l'efficacité du produit pyrolytique étant récupérée dans une base de données (18) contenant les efficacités de pyrolyse de procédés de pyrolyse antérieurs dudit réacteur (4).

**2.** Procédé selon la revendication 1, les paramètres des matériaux déchets d'origine organique et/ou inorganique comprenant au moins une densité en hydrate de carbone.

**3.** Procédé selon la revendication 1 ou 2, les paramètres des matériaux déchets d'origine organique et/ou inorganique concernant au moins les types de polymères.

**4.** Procédé selon la revendication précédente, les paramètres des matériaux déchets d'origine organique et/ou inorganique comprenant une longueur de chaîne moyenne de polymère.

**5.** Procédé selon la revendication précédente, la longueur de chaîne moyenne de polymère étant calculée par :

- identification des types de polymères,
- récupération dans la base de données (18) de la longueur de chaîne moyenne de chaque type de polymère,
- calcul de la longueur de chaîne moyenne de polymère du lot.

**6.** Procédé selon l'une quelconque des revendications précédentes, la température de l'arc de plasma étant contrôlée en régulant un ou plusieurs paramètres du dispositif de formation de plasma (10), par exemple la tension et/ou l'ampérage et/ou la fréquence et/ou la pression d'un gaz formant plasma.

**7.** Procédé selon l'une quelconque des revendications précédentes, comprenant, après le traitement de lot, l'étape de stockage de données du traitement de lot dans la base de données (18) fonctionnellement reliée au réacteur (4), où les données stockées comprennent au moins : l'efficacité du réacteur et/ou l'efficacité du produit pyrolytique du procédé.

**8.** Procédé selon la revendication précédente, comprenant la mise à jour des données déjà contenues dans la base de données (18) avec les données stockées du traitement de lot.

**9.** Procédé selon la revendication 1, dans lequel un algorithme de calcul de la température cible de l'arc de plasma est selon l'équation suivante : $T = \theta * E_p(B) * B_p * B * \xi$; où T est la température cible de l'arc de plasma en Celsius, $\theta$ est l'efficacité du réacteur, $E_p(B)$ est l'efficacité du produit pyrolytique, $B_p$ est le profil du lot, B est le poids du lot en kilogrammes, $\xi$ est une fonction logarithmique exclusive ; où le profil du lot est une fonction d'une longueur de chaîne moyenne de polymère du lot et d'une densité en hydrate de carbone du lot.

**10.** Réacteur de pyrolyse par plasma (4) comprenant :

- un corps de réacteur (8) définissant une chambre réactionnelle,
- un orifice d'entrée (9) pour alimenter le lot dans la chambre réactionnelle,
- un dispositif de formation de plasma (10), tel qu'une torche de plasma, configuré pour générer un arc de plasma à l'intérieur de la chambre réactionnelle,
- une unité de commande (17) configurée pour: calculer une température cible de l'arc de plasma comme une fonction d'un ou plusieurs paramètres de matériaux déchets d'origine organique et/ou inorganique, et commander la température de l'arc de plasma afin de maintenir la température réelle de l'arc de plasma au niveau de la température cible,
- un orifice de sortie (11) pour la sortie de l'huile de pyrolyse de la chambre réactionnelle où l'unité de commande (17) est configurée pour calculer la température cible de l'arc de plasma comme une fonction de l'efficacité du réacteur ; l'efficacité du réacteur étant le rapport entre la différence du poids du lot alimenté dans le réacteur (4) et du poids du laitier restant après le traitement du lot au poids du lot alimenté dans le réacteur (4) ; l'unité de commande (17) étant configurée pour récupérer l'efficacité du réacteur dans une base de données (18) contenant les efficacités du réacteur de procédés de pyrolyse antérieurs dudit réacteur (4) ; et/ou

l'unité de commande (17) étant configurée pour calculer la température cible de l'arc de plasma comme une fonction de l'efficacité du produit pyrolytique ; l'efficacité du produit pyrolytique étant calculée comme le rapport entre le poids du matériau converti en huile de pyrolyse, ou le poids de l'huile de pyrolyse, et le poids du lot alimenté dans le réacteur (4) ; l'unité de commande (17) étant configurée pour récupérer l'efficacité du produit pyrolytique dans une base de données (18) contenant les efficacités du produit pyrolytique de procédés de pyrolyse antérieurs dudit réacteur (4).

**11.** Réacteur selon la revendication précédente, comprenant la base de données (18) fonctionnellement reliée à l'unité de commande (17) et configurée pour stocker les données du traitement de lot, les données stockées comprenant au moins : l'efficacité du réacteur et/ou l'efficacité du produit pyrolytique.

**12.** Réacteur selon la revendication 10 ou 11, le réacteur (4) comprenant un capteur de température (21) pour mesurer la température de l'arc de plasma.

**13.** Réacteur selon la revendication 10 ou 11 ou 12, le réacteur (4) comprenant des capteurs (19) pour identifier des types de polymères, lesdits capteurs (19) étant placés en amont de la chambre réactionnelle.

**14.** Réacteur selon l'une quelconque des revendications de 10 à 13, le réacteur (4) comprenant des capteurs (20) pour mesurer la densité en hydrate de carbone, lesdits capteurs (20) étant placés en amont de la chambre réactionnelle.

**15.** Réacteur selon l'une quelconque des revendications de 10 à 14, comprenant en outre :

- un catalyseur zéolitique ayant une structure inversée de charpente type Mordenite (MFI) et une taille de mésopore intracristallin moyenne située dans la plage d'environ 2,0 à environ 4,5 nm, **caractérisé par** un volume moyen de mésopore dans la plage d'environ 0,1 cm$^3$/g à environ 0,2 cm$^3$/g, ou

- un catalyseur zéolitique ayant une structure Chabazite (CHA) et une taille de mésopore intracristallin moyenne située dans la plage d'environ 2,0 à environ 4,5 nm, **caractérisé par** un volume moyen de micropore dans la plage d'environ 0,05 à environ 0,15 cm$^3$/g, ou

- un catalyseur zéolitique ayant une structure Chabazite (CHA) ou inversée de charpente type Mordenite (MFI) et une taille de mésopore intracristallin moyenne située dans la plage d'environ 2,0 à environ 4,5 nm, **caractérisé en outre en ce qu'**il comprend du molybdène (Mo) ou du platine (Pt) comme métal de déshydrogénation.

FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007114119 A
- WO 2014146128 A
- US 6184427 B
- US 2014228605 A

**Non-patent literature cited in the description**

- **ZHU, J et al.** *Front. Chem. Sci. Eng.,* 2013, vol. 7 (2), 233-248
- **ZHU, X et al.** *Chem. Commun.,* 2014, vol. 50, 14658-61
- **V. SHETTI ; J. KIM ; R. SRIVASTAVA ; M. CHOI ; R. RYOO.** *Journal of Catalysis,* March 2008, vol. 254 (2), 296-303
- **TOSHIAKI HANAOKA.** *Catalysts,* 2015, vol. 5, 88-105